# EUROPEAN PATENT APPLICATION

(11) **EP 1 923 232 A1**
(43) Date of publication of application: **21.05.2008**
(21) Application number: 07022175.9
(22) Date of filing: 15.11.2007
(51) Int. Cl.: B60B 27/02, B60B 1/04

(54) **Hub for a bicycle wheel and bicycle wheel comprising such a hub**

(30) Priority: 20.11.2006 IT MI20062221
(71) Applicant: CAMPAGNOLO S.r.l., 36100 Vicenza (VI) (IT)
(72) Inventor: Urbani, Davide, 36075 Montecchio Maggiore (Vicenza) (IT); Busa, Andrea, 36030 Zugliano (Vicenza) (IT)
(74) Representative: Castiglia, Paolo

(57) **Abstract**

A hub (1) for a bicycle wheel, comprises a substantially tubular body (2) having, at the opposite free end portions thereof, a plurality of spoke attachment elements (5) projecting radially from the body (2) and provided with seats (10) for housing the spokes (20) of the bicycle wheel. The seats (10) are formed on at least one front surface (6) of the spoke attachment elements (5). The mounting of the spokes in a hub having such seats is simpler and quicker than in conventional hubs.

## Description

The present invention relates to a hub for a bicycle wheel.

The invention also relates to a bicycle wheel comprising such a hub.

Preferably, the hub of the present invention is intended to be used in a mountain-bike wheel, but it is not excluded that it could be used in a city-bike or in a racing bicycle.

As known, a bicycle wheel comprises a plurality of spokes extending between the hub, which constitutes the central element of the wheel adapted to be associated with the bicycle frame, and the rim on which the tyre is mounted.

The hub, in turn, comprises a substantially tubular body having, at the opposite free end portions thereof, a plurality of seats for housing the spokes of the wheel. Inside the body of the hub a shaft is provided. Such a shaft is rotatably associated with the hub body through special bearings fitted onto the opposite free end portions of the shaft and is connected, at said opposite free end portions, with the bicycle frame.

Hubs are known in which the seats for housing the spokes are defined by through holes formed on spoke attachment elements projecting radially from the opposite free end portions of the hub body. An example of such a hub is described and illustrated in US 478,394. In the assembly of a wheel comprising the aforementioned hub, the spoke is mounted on the hub inserting its head at the top into the respective housing hole and then sliding it with respect to such a hole. Due to the relative sizes of the end of the spoke and of the hole, the insertion of the spoke into the hole requires special attention.

The Applicant has sought an alternative solution to the one described above. This has been done in order to simplify as much as possible the mounting step of the spoke on the hub.

The invention therefore relates, in a first aspect thereof, to a hub for a bicycle wheel, comprising a substantially tubular body having, at at least one of the opposite free end portions thereof, a plurality of spoke attachment elements projecting radially from said body, wherein at least one of the spoke attachment elements comprises at least one seat for housing at least one spoke, characterised in that said at least one seat is formed on at least one front surface of said spoke attachment element.

Throughout the present description and in the subsequent claims, the expression "front surface" is used to indicate the surface of an element of the hub that is seen when the hub is observed from the front of any of end faces thereof and when the hub is turned so as to have its opposite end face in front. In particular, we thus refer to both the forward front surface and the rear front surface of such an element.

Advantageously, in the hub of the present invention the assembly of the spokes is carried out by frontally inserting the end portion of spoke adapted to couple with the hub in the respective front seat formed on the spoke attachment element of the hub. The Applicant has found that such a frontal insertion is much quicker and easier than the top insertion necessary to mount the spoke in the hub described in US 478,394.

Preferably, the spoke attachment element comprises an axially outer front surface, an axially inner front surface opposite the axially outer front surface, a first side surface, a second side surface opposite the first side surface and a radially outer surface, wherein said at least one seat is formed on at least one of the aforementioned axially outer front surface and the aforementioned axially inner front surface.

Throughout the present description and in the subsequent claims, the expressions "axially outer" and "axially inner" are used to indicate, respectively, a farther position and a closer position, along a direction parallel to that of the rotation axis of the hub, with respect to a reference element arranged at the longitudinal center plane of the hub. The expressions: "radially outer" and "radially inner" are used to indicate, respectively, a farther position and a closer position, along a direction perpendicular to that of the rotation axis of the hub, with respect to a reference element arranged at such a rotation axis. The expression: "side surface", on the other hand, is used to indicate the surfaces that lie between the forward front surface and the rear front surface and between the radially outer surface and a radially inner surface (or base surface) of the hub element being referred to.

Preferably, said at least one seat comprises a first opening formed on said at least one front surface and a second opening formed on at least one of the aforementioned radially outer surface, first side surface and second side surface, said first opening and second opening being in communication with each other through a slit formed on said at least one front surface of the spoke attachment element. Advantageously, the insertion of the end portion of spoke in the seat is carried out by frontally inserting such an end portion in the aforementioned slit. Such an operation is quick and easy.

Preferably, the aforementioned slit communicates with a cavity formed in the spoke attachment element and extending between the aforementioned first opening and second opening. Such a cavity, advantageously, houses the end portion of spoke when the spoke is tensioned.

In a first embodiment of the hub of the present invention, the aforementioned cavity extends in the spoke attachment element along a first direction belonging to a first plane containing a longitudinal symmetry axis of the hub body. Such a hub is advantageously used when one wishes to manufacture a wheel in which the spokes extend radially from the hub.

Preferably, the aforementioned first direction is inclined by a predetermined angle with respect to a plane perpendicular to the longitudinal symmetry axis of the hub body. Such an angle, in particular, is equal to the camber angle of the wheel.

In an alternative embodiment of the hub body of the present invention, the aforementioned cavity extends in the spoke attachment element along a second direction belonging to a second plane not containing a longitudinal symmetry axis of the hub body. Such a hub is advantageously used when one wishes to manufacture a wheel in which the spokes are inclined with respect to the radial direction.

In general, the man skilled in the art shall recognise that the cavity for housing the spoke can extend in the spoke attachment element along any direction orientated away from the hub, i.e. along any direction orientated towards the rim of the wheel.

Preferably, the aforementioned second direction belongs to a third plane inclined by a predetermined angle with respect to a plane perpendicular to the longitudinal symmetry axis of the hub body. Also in this case such an angle is, in particular, equal to the camber angle of the wheel.

Preferably, said at least one front surface, and/or the opposite front surface of the same spoke attachment element, comprises at least one surface portion going inside the spoke attachment element and defining a groove. Preferably, the going inside-surface portion is inclined towards the inside of the spoke attachment element by a relief angle with respect to a plane perpendicular to a longitudinal symmetry axis of the hub body.

Advantageously, the hub of the present invention is in this case particularly light without its structural strength being compromised for this reason. Indeed, the material that constitutes the spoke attachment elements is reduced to the minimum at that portion of body of the spoke attachment elements that does not provide any contribution in terms of structural strength. Preferably, the inclined surface portion is indeed defined at a radially inner portion of said spoke attachment element, whereas the radially outer portion of the spoke attachment element, in which the seat for housing the spokes is formed, is not lightened, since it is subjected to stresses that derive from the tensioning of the spoke and to those generated during use of the wheel.

The hub of the present invention can be manufactured in a plurality of embodiments adapted to different types of bicycle wheels.

For example, in a first embodiment of the hub of the present invention, each spoke attachment element preferably comprises at least one seat, and more preferably each seat extends radially in a respective spoke attachment element. In this way a wheel can be manufactured in which all of the spokes extend from the hub to the rim in the radial direction. Such a wheel is particularly suitable for being used as a front wheel for a bicycle with a brake that acts upon the rim, for example a V-brake.

In this case, preferably, there are the same number of spoke attachment elements at both of the free end portions of the hub body.

In a second embodiment of the hub of the present invention, at least one of the spoke attachment elements comprises at least two seats. In particular, said at least two seats are formed on opposite front surfaces of the spoke attachment element and extend according to opposite directions with respect to a radial center plane of said spoke attachment element. In this way a wheel can be manufactured in which all of the spokes extend from the hub to the rim in a non-radial direction, and in particular a wheel in which the spokes cross over one another. Such a wheel is particularly suitable for being used as a front or rear wheel for a bicycle with disc brakes.

In particular, in the case of a front wheel for a bicycle with disc brakes, the spoke attachment elements provided at the free end portion of the hub body on which the disc shall be mounted are twice the number of those provided at the opposite end portion of the hub body. On the other hand, in the case of a rear wheel of a bicycle with disc brakes, there is a double number of spoke attachment elements at the end portion of the hub body on which the sprocket assembly is mounted.

In a further embodiment of the hub of the present invention, the spoke attachment elements provided at a free end portion of the hub body comprise two seats and the spoke attachment elements provided at the opposite free end portion of the hub body comprise a seat. In this way a wheel can be manufactured having radial spokes attached to a free end portion of the hub body and spokes crossing over one another associated at the opposite free end portion of the hub body. Such an embodiment is particularly suitable for being used as a rear wheel of a bicycle with a brake that acts upon the rim, for example a V-brake.

In this case, preferably, the spoke attachment elements provided at the free end portion of the hub body on which the sprocket assembly shall be mounted are twice the number of those provided at the opposite end portion of the hub body.

In a second aspect thereof, the invention relates to a hub for a bicycle comprising a substantially tubular body having, at at least one of the opposite free end portions thereof, a plurality of spoke attachment elements projecting radially from said body, characterised in that at least one of said spoke attachment elements comprises at least one front surface having at least one surface portion going inside said spoke attachment element and defining a groove.

Advantageously, such a hub is lighter than those known to the Applicant, for the same structural strength. Indeed, as already stated above, the spoke attachment elements are lightened in that they comprise a smaller amount of material at that portion of body of the spoke attachment elements that does not provide any contribution in terms of structural strength. The inclined surface is, indeed, preferably defined at a radially inner portion of the spoke attachment element, whereas the radially outer portion of the spoke attachment element, in which the spoke is attached, is not lightened, since it is subjected to the stresses that derive from the tensioning of the spoke and to those generated during the use of the wheel.

Preferably, said at least one going inside-surface portion is defined at least at a radially inner portion of said spoke attachment element.

Preferably, said at least one surface portion is inclined towards the inside of said spoke attachment element by a groove angle with respect to a plane perpendicular to a longitudinal symmetry axis (M) of said body.

The spoke attachment element, in particular, preferably comprises opposite front surfaces and can have the same or different grooves at said opposite front surfaces.

In a specific embodiment of the hub of the present invention, the spoke attachment element has a different thickness, defined between said opposite front surfaces, along its radial extension.

Preferably, the spoke attachment element comprises side surfaces that come close to one other, in the circumferential direction, moving radially outwards.

In a different embodiment of the hub of the present invention, the side surfaces come close to one another, in the circumferential direction, moving radially outwards in at least one radially outer portion of said spoke attachment element.

In a third aspect thereof, the invention relates to a bicycle wheel comprising a hub of the type described above.

Advantageously, such a wheel has all of the advantageous characteristics discussed above with reference to the hub of the present invention.

Further characteristics and advantages of the present invention shall become clearer from the following detailed description of some preferred embodiments thereof, made with reference to the attached drawings. In such drawings:
- figure 1 is a schematic perspective view of a hub in accordance with a first embodiment of the present invention;
- figure 2 is an enlarged perspective view of the hub-spokes coupling area of a wheel in which the hub of figure 1 is used;
- figures 2A and 2B are a longitudinal section and a front view, respectively, of the hub of figure 1;
- figures 3 and 4 illustrate the assembly steps of a spoke in the hub of figure 1;
- figure 5 is a perspective view of a wheel in which an alternative embodiment of the hub of the present invention is used;
- figure 6 is an enlarged perspective view of the hub-spokes coupling area of the wheel of figure 5, from a first point of observation;
- figure 7 is an enlarged perspective view of the hub-spokes coupling area of the wheel of figure 5, from a second point of observation opposite the first point of observation;
- figures 7A and 7B are a longitudinal section and a front view, respectively, of the hub of the wheel of figure 5;
- figure 8 is an enlarged perspective view of the hub-spokes coupling area of a wheel in which a further embodiment of the hub of the present invention is used;
- figures 8A and 8B are a longitudinal section and a front view, respectively, of the hub of the wheel of figure 8;
- figure 9 is an enlarged perspective view of the hub-spokes coupling area of a wheel in which yet another further embodiment of the hub of the present invention is used;
- figures 9A and 9B are a longitudinal section and a front view, respectively, of the hub of the wheel of figure 9;
- figure 10 is a schematic view in longitudinal section of a different embodiment of the hub of the present invention;
- figure 11 is a cross section view according to the section plane A-A of the hub of figure 10;
- figure 12 is a cross section view according to the section plane B-B of the hub of figure 10.

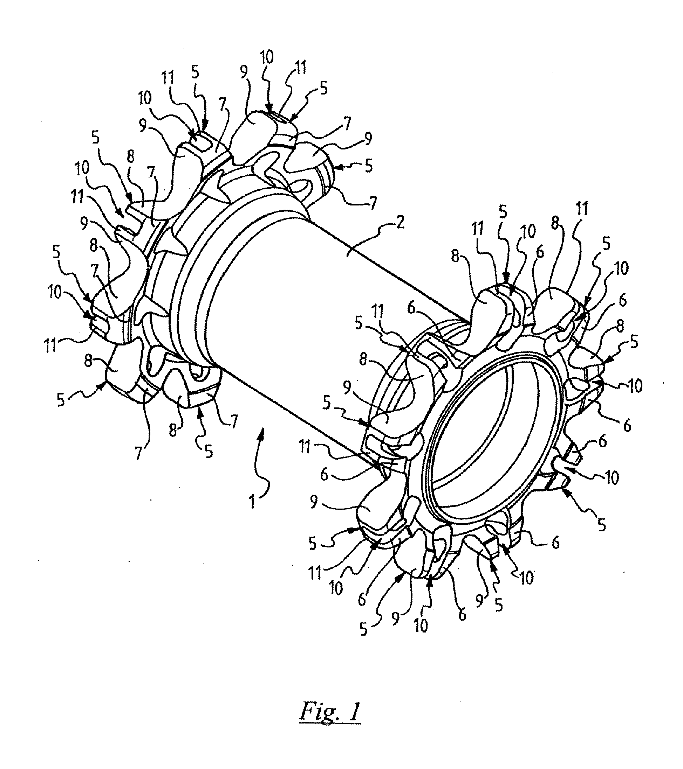

In figures 1-4, a first embodiment of a hub for a bicycle wheel according to the present invention is indicated with 1. The hub 1 is, in particular, a hub for a front wheel of a mountain bike with a brake that acts upon the rim, for example a V-brake, but it is not excluded that it could be used on a different type of bicycle, for example general city-bikes or racing bicycles, or on different types of wheels, for example on rear wheels.

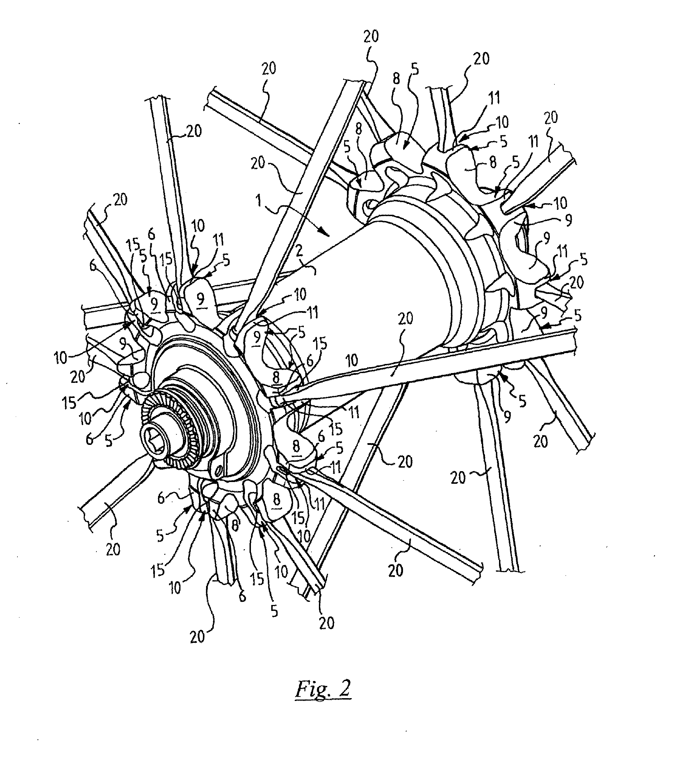

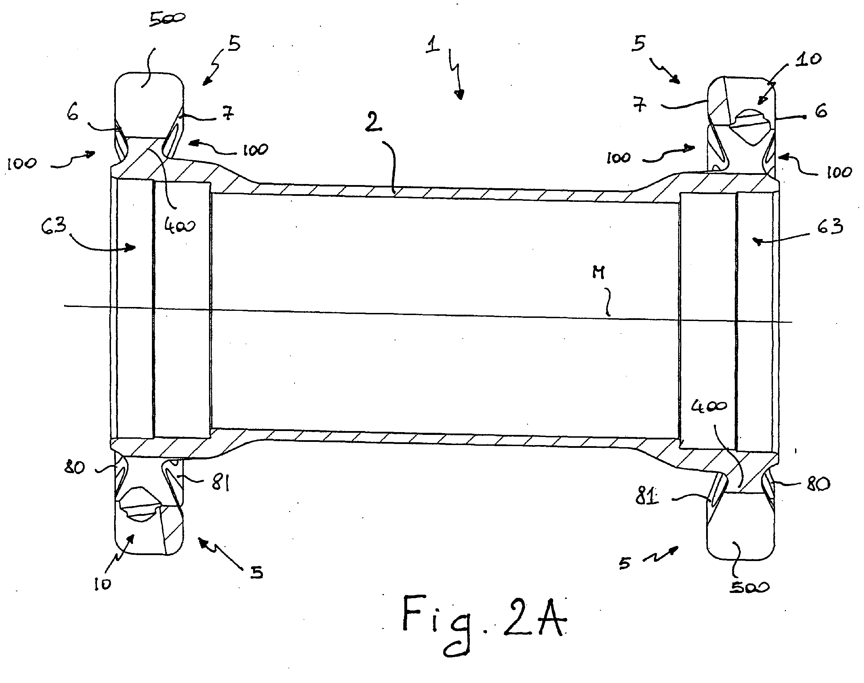

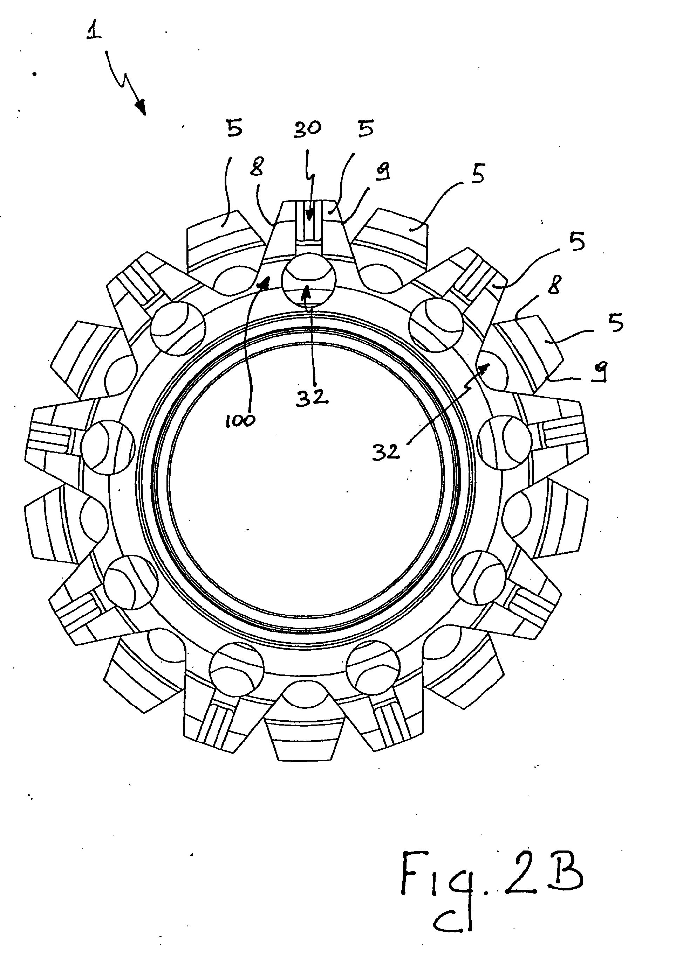

The hub 1 is substantially symmetrical, as shown in figure 2A, that is its geometry at the opposite free end portions of the body 2 is identical.

The hub 1 comprises a substantially tubular body 2 having, at the opposite free end portions thereof, a plurality of spoke attachment elements 5 that project radially from the body 2. Preferably, the interior of the tubular body 2 has at the ends thereof annular grooves 63 for seating bearings, positioned radially inwardly with respect to the spoke attachment elements 5. In each spoke attachment element 5 a respective coupling seat 10 is formed in which an end portion 15 of a spoke 20 is inserted (figure 2).

The seats 10 extend in the spoke attachment elements 5 according to a radial direction.

With reference to figure 2, each spoke attachment element 5 comprises an axially outer front surface 6, an axially inner front surface 7 opposite the axially outer front surface 6, a first side surface 8, a second side surface 9 opposite the first side surface 8 and a radially outer surface 11 extending between said axially outer front surface 6 and said axially inner front surface 7 and between said first side surface 8 and said second side surface 9.

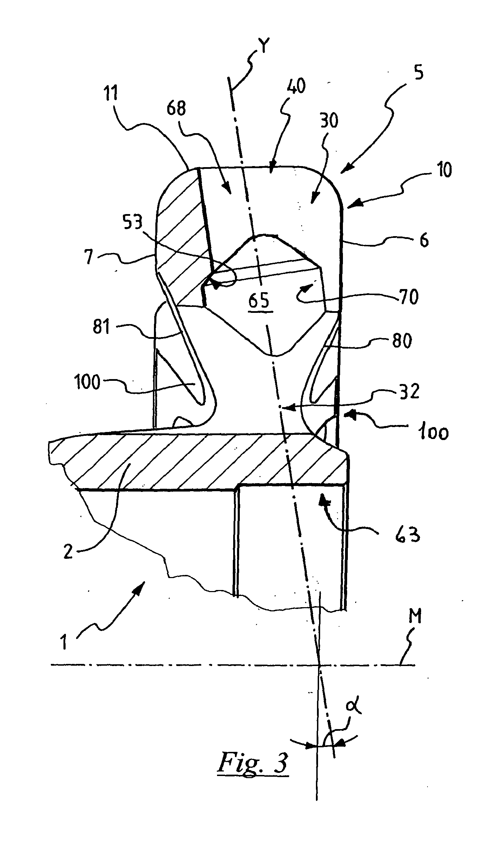

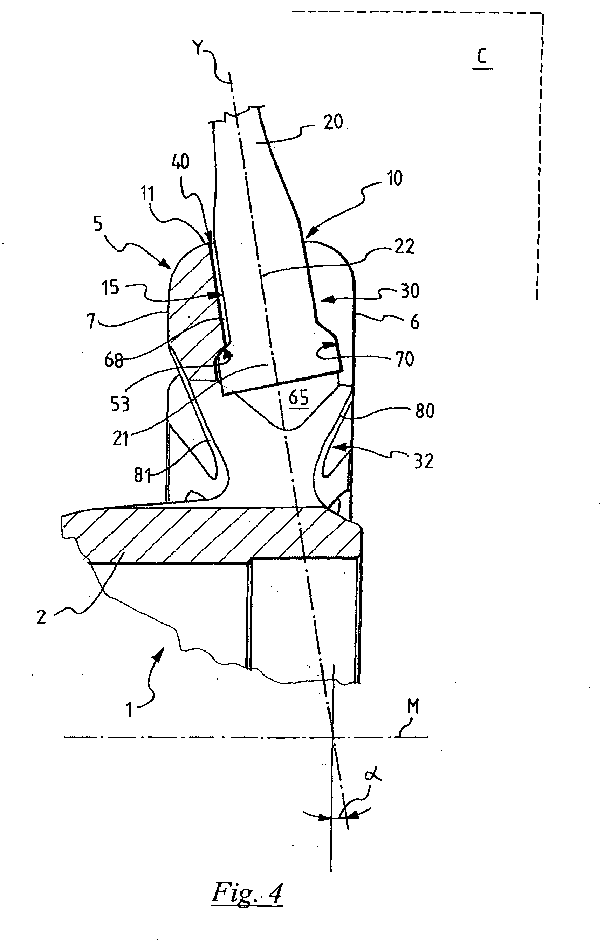

With particular reference to figures 3 and 4, the coupling seats 10 communicate with the outside through a slit 30 and a through hole 32, both extending in the body 2 of the hub 1 in the direction of its axis M starting from the radially outer front surface 6 of the spoke attachment elements 5.

The hole 32 is formed in a radially inner position with respect to the slit 30 and communicates, through said slit 30, with an opening 40 formed on the radially outer surface 11 of the spoke attachment element 5 and adapted to allow the passage of the spoke 20 from the hub 1 to the rim of the wheel in the configuration with the wheel assembled.

The seats 10 are thus open towards the outside in the radial direction of the hub and in the direction of the axis M towards the radially outer front end surface 6.

In the assembly step of the wheel 1, the seats 10 receive the spokes 20 through said holes 32 and slits 30. In particular, the hole 32 is of sufficient size for the passage of a head 21 of the spoke 20, whereas the slit 30 is of sufficient size for the passage of a neck 22 but not of the head 21.

Each seat 10 comprises a larger cavity 65 at least partially defined by the inner surface 53 matching the head 21 of the spoke 20 and of sufficient size to receive such a head 21, and a smaller cavity 68 having a smaller section than the cavity 65 and of sufficient size to receive the neck 22 of the spoke 20. The larger cavity 65 is thus placed between the hole 32 and the smaller cavity 68 along the radial direction of the hub.

In figure 3 the smaller cavity 68 is an extension of the slit 30. Therefore, it has the same width of slit 30. In other embodiments, the smaller cavity 68 can have a different width than the outer part of the slit 30.

Both the cavities 65 and 68 are axially (with reference to the rotation axis M of the hub) behind the slit 30, so that when a spoke 20 is inserted into the seat 10 and is subjected to traction, a portion of side surface 70 of the larger cavity 65, defining an undercut with the slit 30, prevents the spoke 20 from slipping out from the seat 10 in the direction of the axis M of the hub, whereas the stop surface 53, defining a second undercut at the interface between the larger cavity 65 and the smaller cavity 68, holds the head 21 of the spoke in the direction of traction.

The circumferential size of the seat 10 in the area adapted to house the neck 22 is slightly greater than that of the neck 22 to make it easier to position the end portion 16 of the spoke 5 in the seat 10, as shall become clearer later on.

The cavities 65 and 68 of each seat 10 extend according to a radial axis Y that in a mounted configuration (figure 4) coincides with the longitudinal axis of the corresponding spoke 20, and is inclined by an angle α with respect to a plane perpendicular to the axis M of the hub 1. The angle α is equal to the camber angle of the wheel 1. The axis Y belongs to a plane C containing the axis of longitudinal symmetry of the body 2 of the hub 1.

During the assembly step of the wheel, illustrated in figures 3 and 4, the spoke 20 is inserted into the larger cavity 65 and smaller cavity 68 through the passage consisting of the hole 32 and the slit 30. The spoke is then tensioned and then locked on the rim 2 for example through a nipple; in particular, the nipple is screwed onto the spoke until a predetermined tension value is reached in the spoke.

The inner surface of the seat 10 at the smaller cavity 68 and the stop surface 53 in the interface area between the larger cavity 65 and the smaller cavity 68 has a shape matching that of the side surface of the neck 22 and of the head 21 of the spoke 20.

Again with reference to figures 3 and 4, the spoke attachment element 5 comprises, at a radially inner portion thereof defined at the hole 32, a lightening groove 100. In particular, the opposite front surfaces 6 and 7 have respective inclined surface portions, respectively indicated with 80 and 81, with respect to a plane perpendicular to the axis M of the hub body 2. The inclination of the surface portions 80 and 81 faces towards the inside of the spoke attachment element 5 and the grooves 100 at the opposite front surfaces 6 and 7 can be identical or different.

In the circumferential direction, as can be seen in figures 1, 2 and 2B, the spoke attachment element 5 has a tapering towards the outside, i.e. the distance between the side surface 8 and the opposite side surface 9 decreases moving radially from the inside towards the outside of the hub. In particular, the tapering goes from the base of the spoke attachment element 5 and extends for its entire height substantially forming a truncated pyramid.

What has been described above is just an example embodiment of the invention, many different embodiment being indeed possible. Hereafter, only some of these different embodiments are described, in which elements corresponding to those described above have been indicated with the same reference numerals.

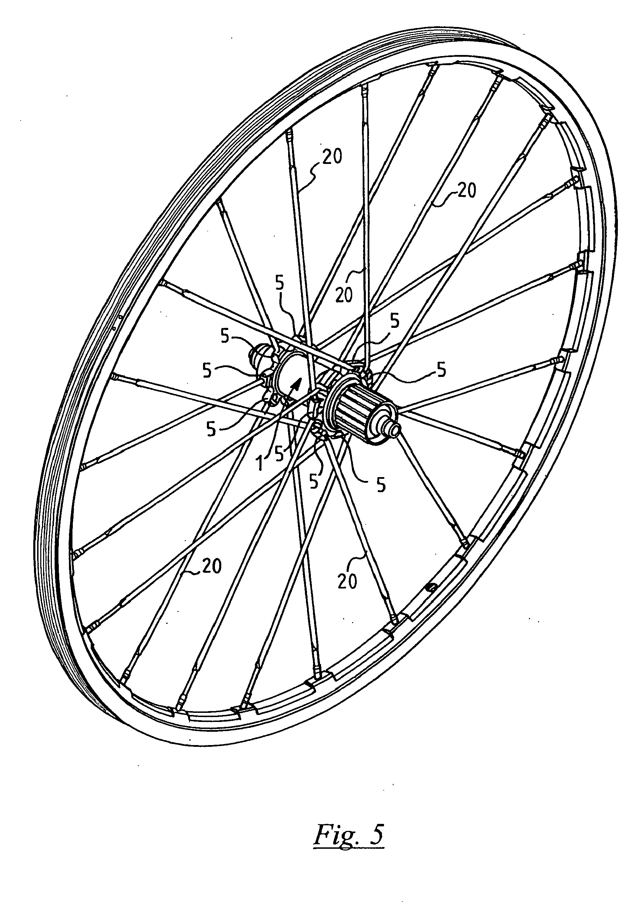

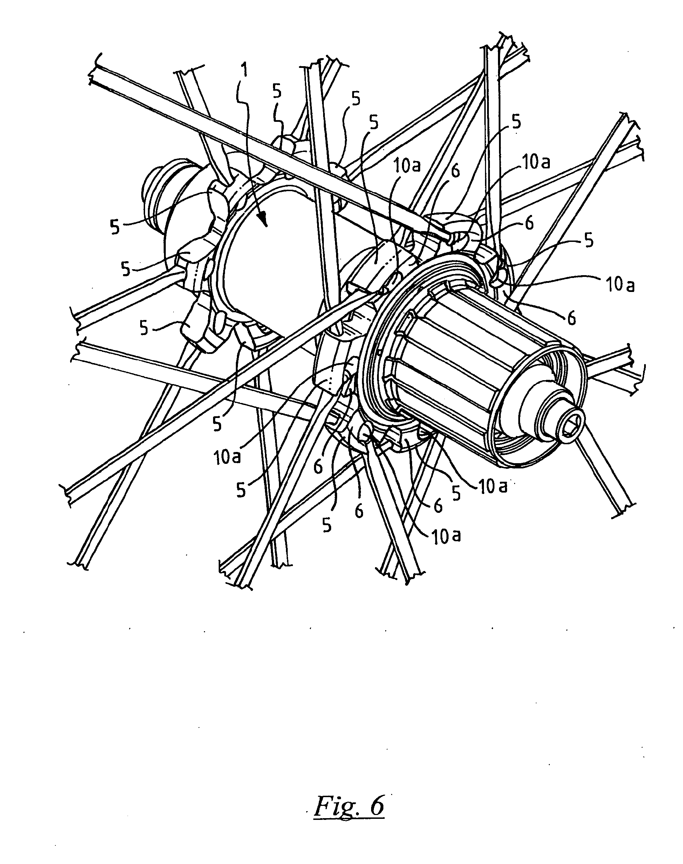

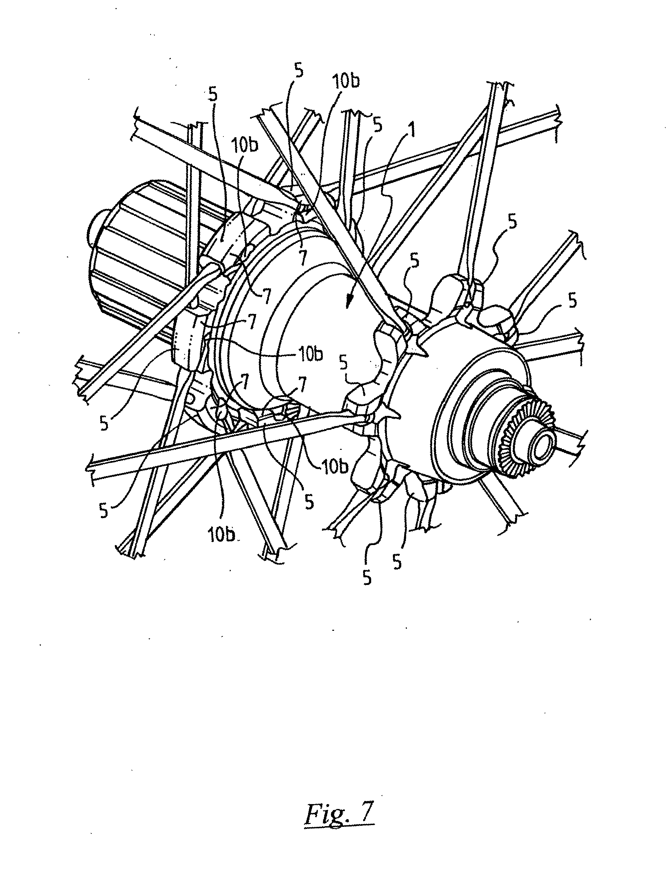

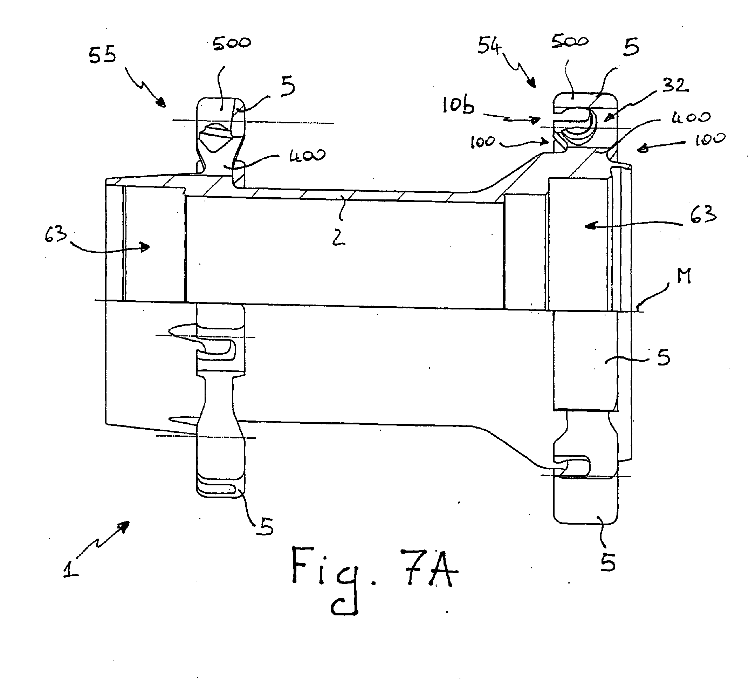

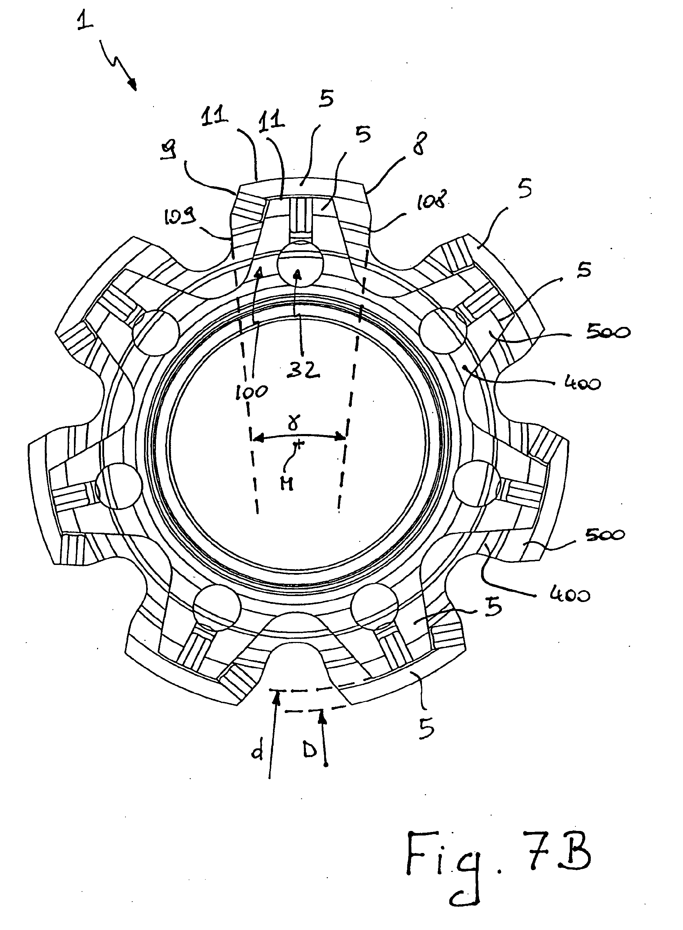

Figures 5-7 show a further embodiment of the hub 1 of the present invention. The wheel represented is, in particular, a rear wheel of a bicycle with a brake that acts upon the rim, for example a V-brake. The hub 1 of this embodiment differs from that of figures 1-4 for the sole reason that, at the free end portion 54 (see figure 7A) thereof in which the sprocket assembly is mounted, it has spoke attachment elements 5 each comprising two seats 10a, 10b (see in particular figures 6 and 7, which show the hub 1 from two opposite points of observation) preferably, but not limited to, formed on the opposite front surfaces 6 and 7 of such a spoke attachment element 5. The seats 10a, 10b are orientated in a non-radial direction, i.e. they extend according to a direction inclined with respect to the radial direction, for which reason in the configuration with the wheel assembled the spokes 20 extend in planes that do not contain the rotation axis M of the hub.

The seats 10a, 10b have a common through hole 32 orientated according to the axis M of the hub to allow the insertion of the heads 21 of the spoke 20 (figures 6-9).

Preferably, the direction in which the seats 10a, 10b extend belongs to a plane inclined with respect to a plane perpendicular to the rotation axis of the body 2 of the hub, such an inclination being by an angle equal to the camber angle of the wheel.

The two seats 10a, 10b of each spoke attachment element 5 are orientated on the opposite sides with respect to a plane of radial symmetry of the spoke attachment element 5. At the free end portion 55 (see figure 7A) of the hub 1 opposite the one in which the sprocket assembly is mounted, the hub 1 is configured in a totally similar way to what has been illustrated and described with reference to figures 1-4. It should be noted how the number of seats provided on the side of the hub on which the sprocket assembly is mounted is twice that provided on the opposite side of the hub. Moreover, the attachment elements 5 on the free end portion 54 are thicker in the circumferential direction than the attachment elements 5 on the free end portion 55 (see figure 7B). Further, the side surfaces 8 and 9, tapering radially outwardly, are connected at their base with the side surfaces 108 and 109 tapering radially inwardly according to an angle γ shown in figure 7B. In addition, the top surfaces 11 of the attachment elements 5 lay on ideal circumferences on the respective free end portions 54, 55, the circumference on the free end portion 54 being of greater diameter D than the diameter d of the circumference of the free end portion 55.

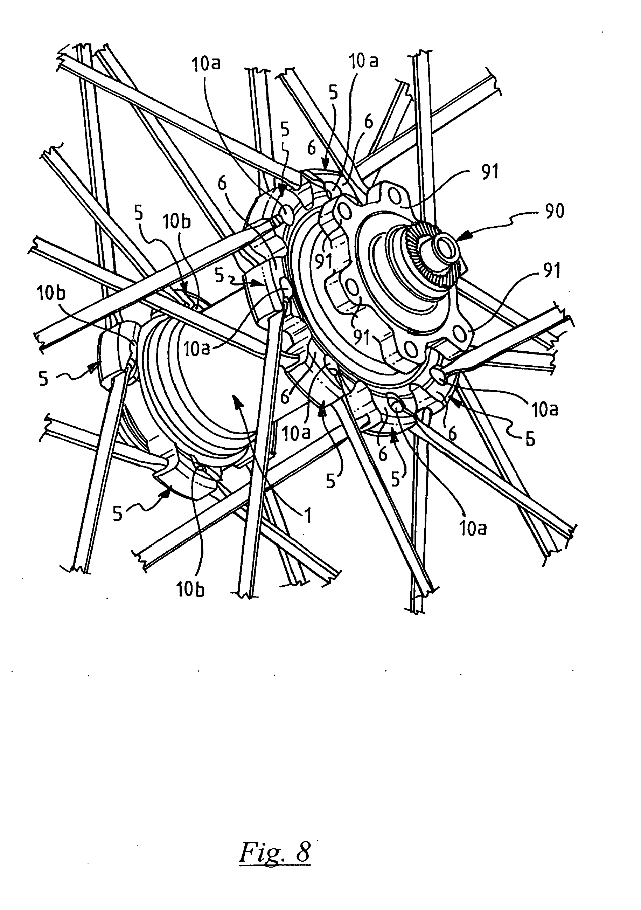

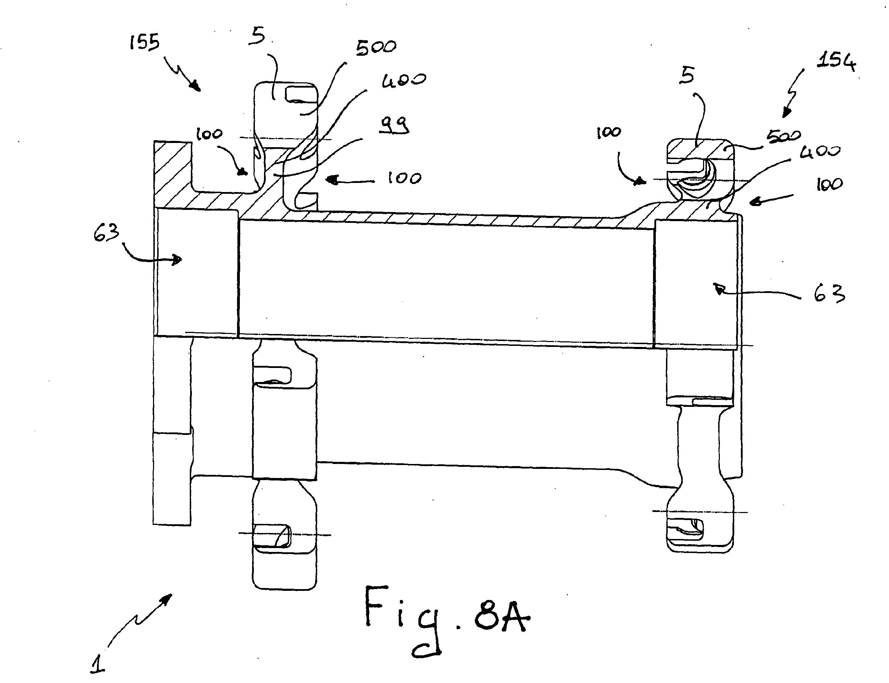

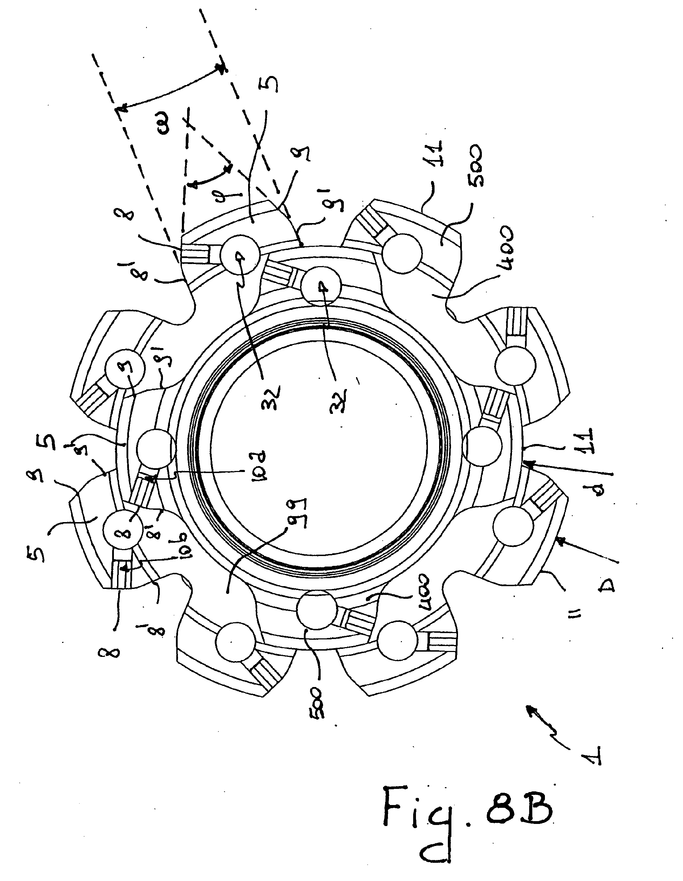

Figure 8 shows the spokes-hub coupling area of a wheel in which a further embodiment of the hub 1 of the present invention is used. In particular, it concerns a front wheel of a bicycle with a disc brake. The hub 1 of this embodiment differs from that of figures 5-7 for the sole reason that it comprises, on both of the opposite free end portions of the hub 1, spoke attachment elements 5 each comprising two seats 10a, 10b. Such spoke attachment elements 5 are similar to those described with reference to figures 5-7. The disc of the brake is mounted on the attachment member 90 provided with six radially projecting portions 91, but other kind of disk brake attachments are possible. It should be noted how the number of spoke attachment elements 5 (and therefore of seats 10) provided on the side 155 of the hub on which the disc of the brake is mounted is twice that provided on the opposite side of the hub 154, and project radially from an annular flange 99 (see figure 8A) thinner than the projecting attachment elements 5. Due to the flange 99 the grooves 100 on the side 155 have a greater radial width. Further the attachment elements 5 have outer side walls 8 and 9 tapering radially outwardly of an angle ϕ, and inner side walls 8' and 9' tapering radially outwardly of an angle ω smaller than ϕ (alternatively, inner side walls 8' and 9' can be parallel or can taper radially inwardly as in figure 7B). The junction between the outer side walls 8, 9 and the inner side walls 8' and 9' is substantially radially outwardly of (or alternatively corresponding to) the hole 32.

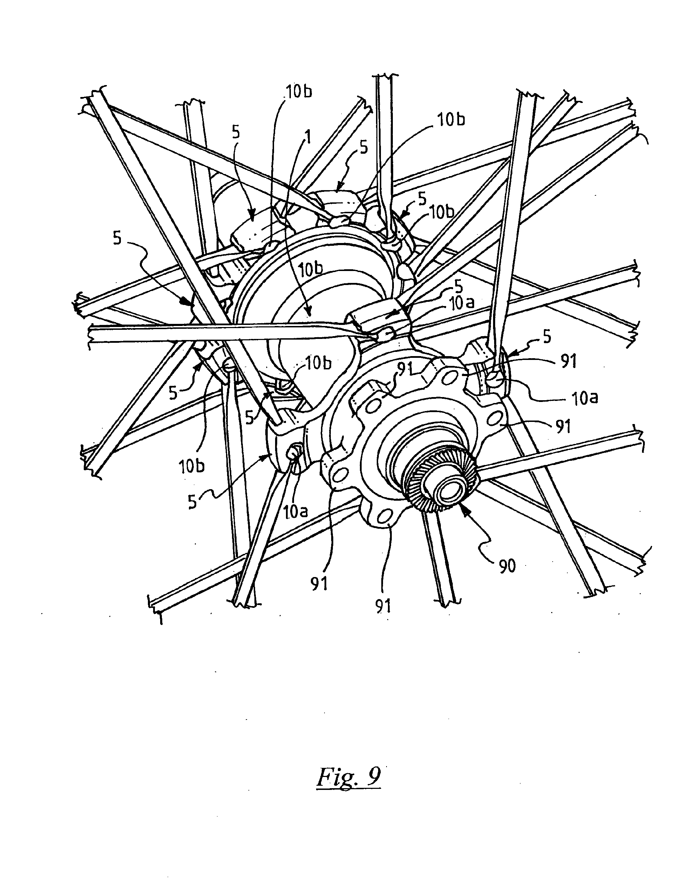

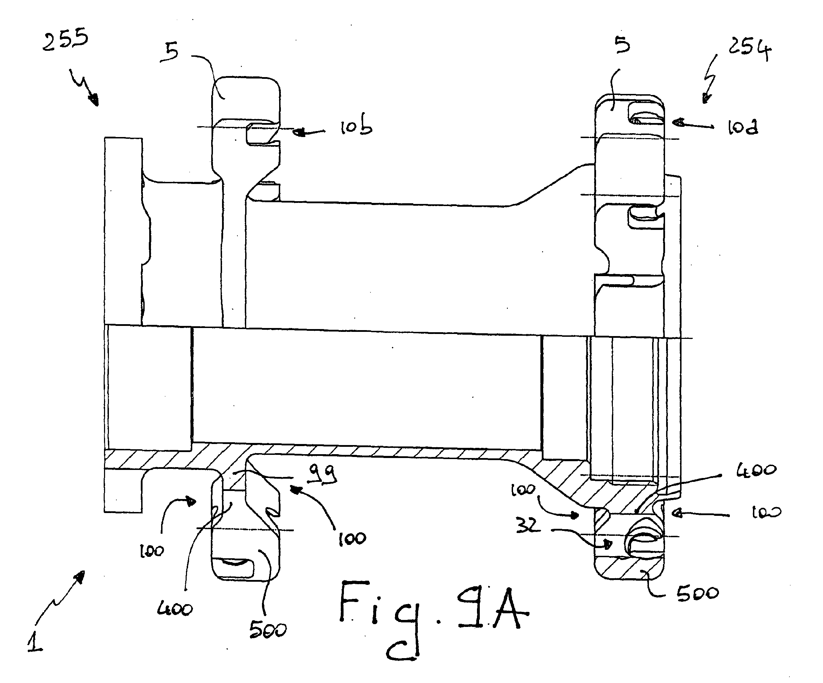

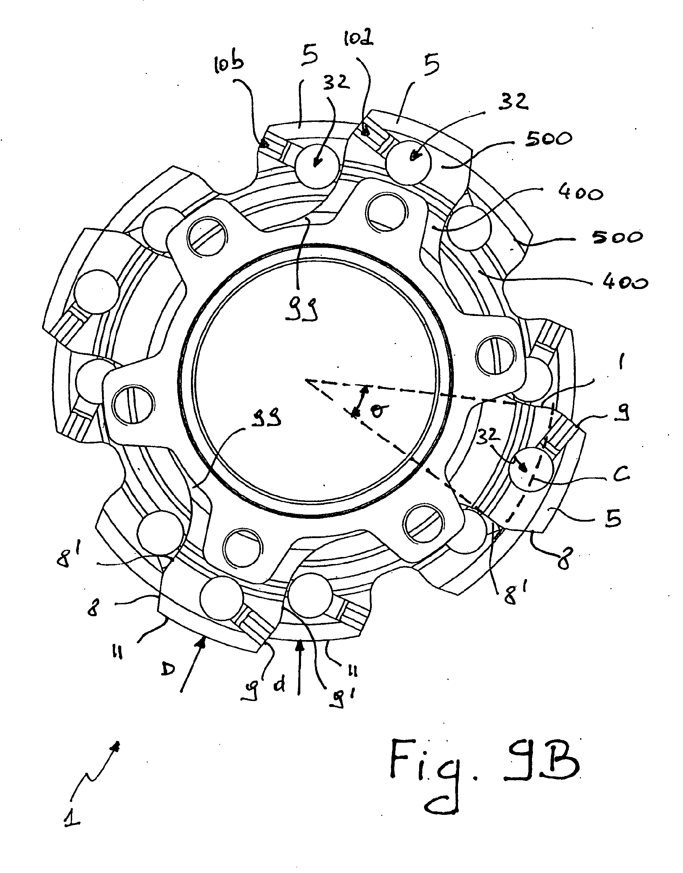

Figure 9 shows the spokes-hub coupling area of a wheel in which a further embodiment of the hub 1 of the present invention is used. In particular it concerns a rear wheel of a bicycle with a disc brake. The hub 1 of this embodiment differs from that of figure 8 in that the number of spoke attachment elements 5 (and therefore of seats 10) provided on the side 255 of the hub on which the sprocket assembly is mounted is doubled.

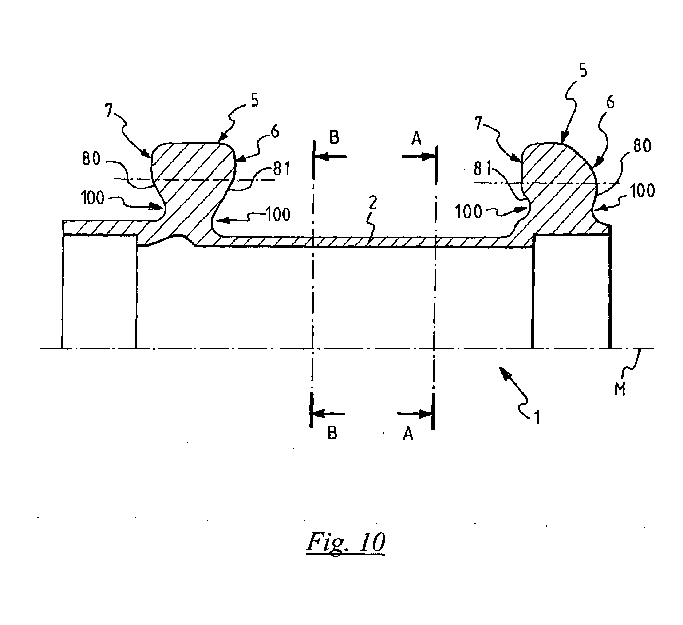

As can be better appreciated in figure 9A and 9B, the top surface 11 of the attaching elements 5 on the side 255 of the hub on which the disc of the brake is mounted lays on an ideal circumference with a diameter D greater than the diameter d of the attaching elements 5 on the other side 254. Further, attaching elements 5 on side 254 have side walls 8, 9, 8' and 9' as those in figure 8B, i.e. all tapering outwardly, while attaching elements 5 on side 255 have prolonged inner side walls 8' and 9' initially tapering radially inwardly of an angle θ and than carving to join the flange 99. The junction between inner side walls 8', 9' and outer side walls 8, 9 is located on an ideal circumference C crossing the hole 32 (see figure 9B).Figures 10-12 illustrate a further different embodiment of a hub in accordance with the present invention. In figure 10 it is possible to see the lightening grooves 100 defined on a radially inner portion 52 of the spoke attachment elements 5 (in figures 10-12 the radially inner portion 52 is separated from the radially outer portion 51 by a dashed theoretical line). Also in this case the grooves 100 are defined by recesses at a portion 80, 81 of the front surfaces 6 and 7. In particular, the portions 80, 81 of front surface are inclined towards the inside of the spoke attachment element 5 with respect to a plane perpendicular to the axis M of the hub body 2. Thus, the thickness between the forward front surface 6 and the rear front surface 7, and therefore the axial extension of the spoke attachment element, at a radially inner portion 52 thereof is less than the thickness between the aforementioned front surfaces at a radially outer portion 51 of the spoke attachment element 5. In other words, the spoke attachment element 5 has a radially inner portion 52 the axial extension of which, moving radially from the inside towards the outside of the hub, increases.

With reference to figure 10, it should be noted how, at the axially inner front surface 81 of each spoke attachment element 5, the grooves 100 extend towards the hub body more than at the axially outer front surface 80. The hub body 2 therefore has, in the longitudinal portion thereof between the spoke attachment elements 5 defined at its opposite free end portions, a reduced outer diameter with respect to that at its opposite free end portions.

Moreover, in figure 10 it should be noted how the spoke attachment element 5 illustrated on the right has a thickness defined between the opposite front surfaces 6 and 7 that is variable along its entire radial extension.

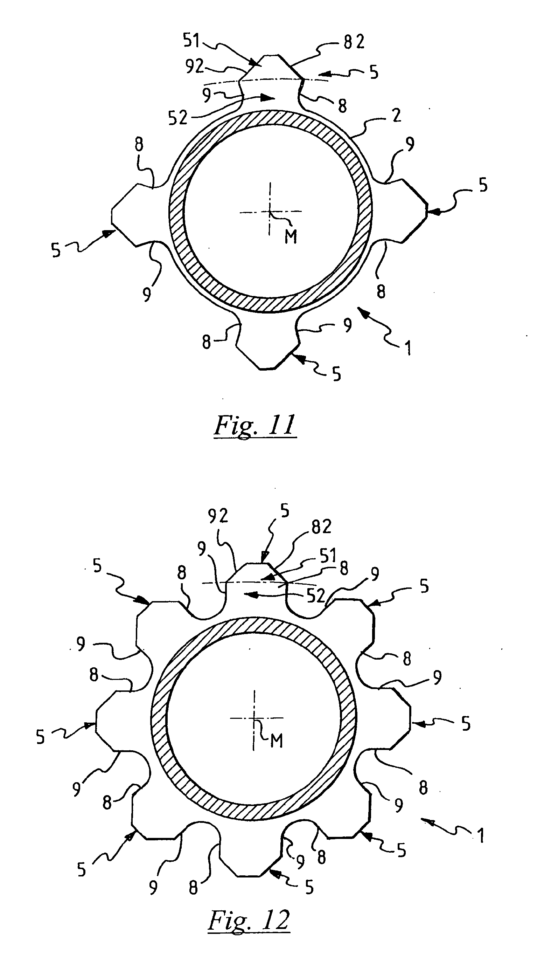

In the circumferential direction, as can be seen in figure 11 and 12, the spoke attachment element 5 has, at the radially outer portion 51 thereof, a tapering, i.e. the thickness between the side surface 8 and the opposite side surface 9 at the radially outer portion 51 of the spoke attachment element 5 decreases moving radially from the inside towards the outside of the hub. The portions of side surfaces 8 and 9 of the radially outer portion 51 of the spoke attachment elements 5 are indicated in figures 10 and 11 with 82 and 92.

It should be noted that the attachment elements 5 of all the embodiments represented in the figures from 1 to 12 have in common a first portion 400 for anchoring to the tubular body 2, the anchoring portion having a larger width in the circumferential direction than in the axial direction, and radially outer portion 500 where the coupling seats 10 are formed, that are wider in the axial direction than the anchoring portion 400.

## Claims

1. Hub (1) for a bicycle wheel, comprising a substantially tubular body (2) having, at at least one of the opposite free end portions thereof, a plurality of spoke attachment elements (5) projecting radially from said body (2), at least one spoke attachment element (5) of said plurality of spoke attachment elements comprising at least one seat (10) for housing at least one spoke (20), **characterised in that** said at least one seat (10) is formed on at least one front surface (6, 7) of said spoke attachment element (5).

2. Hub (1) according to claim 1, in which said spoke attachment element (5) comprises an axially outer front surface (6), an axially inner front surface (7) opposite the axially outer front surface (6), a first side surface (8), a second side surface (9) opposite the first side surface (8) and a radially outer surface (11), wherein said at least one seat (10) is formed on at least one of said axially outer front surface (6) and said axially inner front surface (7).

3. Hub (1) according to claim 2, wherein said at least one seat (10) comprises a first opening (32) formed on said at least one front surface (6, 7) and a second opening (40) formed on at least one of said radially outer surface (11), first side surface (8) and second side surface (9), said first opening (32) and second opening (40) being in communication with each other through a slit (30) formed on said at least one front surface (6, 7) of said spoke attachment element (5).

4. Hub (1) according to claim 3, wherein said slit (30) communicates with a cavity (65, 68) formed in said spoke attachment element (5) and extending between said first opening (32) and said second opening (40).

5. Hub (1) according to claim 4, wherein said cavity (65, 68) extends in said spoke attachment element (5) along a first direction belonging to a first plane containing a longitudinal symmetry axis (M) of said body (2).

6. Hub (1) according to claim 5, wherein said first direction is inclined by a predetermined angle (α) with respect to a plane perpendicular to said longitudinal symmetry axis (M) of said body (2).

7. Hub (1) according to claim 5, wherein said cavity (65, 68) extends in said spoke attachment element (5) along a second direction belonging to a second plane not containing a longitudinal symmetry axis (M) of said body (2).

8. Hub (1) according to claim 7, wherein said second direction belongs to a third plane inclined by a predetermined angle (α) with respect to a plane perpendicular to said longitudinal symmetry axis (M) of said body (2).

9. Hub (1) according to any one of the previous claims, wherein at least one front surface (6, 7) of said spoke attachment element (5) comprises at least one surface portion (80, 81) going inside said spoke attachment element (5).

10. Hub (1) according to claim 9, wherein said surface portion (80, 81) is inclined towards the inside of said spoke attachment element (5) by a relief angle with respect to a plane perpendicular to a longitudinal symmetry axis (M) of said body (2).

11. Hub (1) according to claim 10 when depending on claim 7 or 8, wherein said relief angle is equal to said predetermined angle (α).

12. Hub (1) according to claim 10 or 11, wherein said at least one inclined surface portion (80, 81) is defined at a radially inner portion of said spoke attachment element (5).

13. Hub (1) according to any one of the previous claims, wherein each spoke attachment element (5) comprises at least one seat (10).

14. Hub (1) according to claim 13, wherein each seat (10) extends radially in a respective spoke attachment element (5).

15. Hub (1) according to claim 13 or 14, wherein said spoke attachment elements (5) are in the same number at both of the free end portions of said body (2).

16. Hub (1) according to claim 13, wherein at least one of said spoke attachment elements (5) comprises at least two seats (10a, 10b).

17. Hub (1) according to claim 16, wherein said at least two seats (10a, 10b) are formed on opposite front surfaces (6, 7) of said spoke attachment element (5) and extend according to opposite directions with respect to a radial center plane of said spoke attachment element (5).

18. Hub (1) according to claim 16 or 17, wherein each spoke attachment element (5) comprises two seats (10a, 10b).

19. Hub (1) according to any one of claims 16 to 18, wherein the spoke attachment elements (5) provided at a free end portion of said body (2) are twice the number of those at the opposite end portion.

20. Hub (1) according to any one of claims 16 to 18, wherein the spoke attachment elements (5) provided at a free end portion of said body (2) comprise two seats (10a, 10b) and the spoke attachment elements (5) provided at the opposite free end portion of said body (2) comprise a seat (10).

21. Hub (1) for a bicycle, comprising a substantially tubular body (2) having, at at least one of the opposite free end portions thereof, a plurality of spoke attachment elements (5) projecting radially from said body (2), **characterised in that** at least one of said spoke attachment elements (5) comprises at least one front surface (6, 7) having at least one surface portion (80, 81) going inside said spoke attachment element (5) and defining a groove (100).

22. Hub (1) according to claim 21, wherein said at least one going inside-surface portion (80, 81) is defined at least at a radially inner portion (52) of said spoke attachment element (5).

23. Hub (1) according to claim 21 or 22, wherein said at least one surface portion (80, 81) is inclined towards the inside of said spoke attachment element (5) by a relief angle with respect to a plane perpendicular to a longitudinal symmetry axis (M) of said body (2).

24. Hub (1) according to any one of claims 21 to 23, wherein said spoke attachment element (5) comprises opposite front surfaces (6, 7) and has the identical grooves (100) at said opposite front surfaces (6, 7).

25. Hub according to claim 23, wherein said spoke attachment element (5) comprises opposite front surfaces (6, 7) and has different grooves (100) at said opposite front surfaces (6, 7).

26. Hub (1) according to claim 24 or 25, wherein said spoke attachment element has a thickness defined between said opposite front surfaces (6, 7) that is different along its radial extension.

27. Hub (1) according to any one of claims 21 to 26, wherein said spoke attachment element (5) comprises side surfaces (8, 9) that come close one to the other, in the circumferential direction, moving radially towards the outside.

28. Hub (1) according to any one of claims 21 to 26, wherein at least one radially outer portion (51) of said spoke attachment element (5) comprises side surfaces (82, 92) that come close one to the other, in the circumferential direction, moving radially towards the outside.

29. Hub (1) according to claim 21, wherein the spoke attachment elements (5) comprises first portions (400) for anchoring to the tubular body (2), the anchoring portion (400) having a larger width in the circumferential direction of the hub than in the axial direction of the hub, and radially outer portions (500), where coupling seats (10) are formed for coupling to spokes, that are wider in the axial direction than the anchoring portions.

30. Bicycle wheel, comprising a hub (1) according to any one of the previous claims.
